# EUROPEAN PATENT SPECIFICATION

(11) **EP 4 247 142 B1**
(45) Date of publication and mention of the grant of the patent: **11.03.2026**
(21) Application number: 21839653.9
(22) Date of filing: 16.11.2021
(51) Int. Cl.: A01D 45/06, B62D 53/02, A01D 67/00

(54) **PROCESSING MACHINE AND METHOD FOR PROCESSING FIBRE PLANTS**
BEARBEITUNGSMASCHINE UND VERFAHREN ZUM BEARBEITEN VON FASERANLAGEN
MACHINE DE TRAITEMENT ET PROCÉDÉ DE TRAITEMENT DE PLANTES À FIBRES

(30) Priority: 17.11.2020 BE 202005831
(43) Date of publication of application: 27.09.2023
(73) Proprietor: Hyler BV, 8710 Sint-Baafs-Vijve (BE)
(72) Inventor: BAERT, Niels, 8710 Sint-Baafs-Vijve (BE)
(74) Representative: Arnold & Siedsma
(86) International application number: PCT/IB2021/000780
(87) International publication number: WO 2022/106887

(56) References cited:
- DE-U1- 8 509 184
- FR-A1- 2 866 516
- FR-A1- 2 916 603
- FR-A1- 3 066 881
- US-A- 4 453 614
- AGRICULTUREVIDEO'S ACV: "Hempflax/Groenoord hempharvest 2019 Double Cut Combine.", YOUTUBE, 7 August 2019 (2019-08-07), pages 1 pp., XP054982016, Retrieved from the Internet <URL:https://www.youtube.com/watch?v=tBikfG2VXtY> [retrieved on 20210702]

## Description

The invention relates to a processing machine for processing fibre plants, such as hemp or flax. The invention also relates to the use of such a processing machine and to a method for processing such fibre plants with the processing machine. XP054982016, which is a YouTube video available under https://www.youtube.com/watch?v=tBikfG2VXtY, discloses a processing machine according to the preamble of appended claim 1.

Numerous machines are known for processing fibre crops such as hemp and flax. The processing can here comprise of picking the crop from the ground, but for instance also of placing the picked fibre crop back onto the ground, picking up the fibre crop placed onto the ground after a period of time, rotating or turning the fibre crop and placing it back down on the ground in a reversed or overturned position, and so on.

Flax plants are for instance usually between 80 and 120 cm long and are harvested by pulling them from the ground using a gripping machine. The harvested flax plant is not removed from the ground immediately. The flax is first placed flat on the ground in long rows or lines, also referred to as "swathes", wherein the stems of the harvested flax plants extend substantially transversely of the longitudinal direction of the swathes. This placing back of the flax flat on the ground surface so that said swathes are created is also referred to as "depositing" or "picking up". When the flax plants are placed in lines or swathes, an intermediate space is left between adjacent lines. These spaces prevent the swathes from becoming tangled in each other.

The harvested flax plants which were placed flat on the ground in rows are then retted under the influence of a combination of dew, rain and sunlight. The retting of the flax by leaving the flax plants on the ground (i.e. a field or retting field) for some time (about two weeks, depending on the weather conditions (moisture, sunlight, and so on)) is referred to in the field of processing flax as field retting or dew retting. In order to obtain a uniform retting and to prevent rotting of the flax, the flax placed flat on the ground in rows must be flipped over regularly. This flipping over of the flax placed flat on the ground is also referred to as "turning" and takes place by driving a so-called flax turner over the ground surface.

Once sufficient retting has taken place, the flax is picked up from the ground and optionally baled and compacted for further processing. The picking up and baling of the flax takes place using a baler.

Hemp plants are generally slightly longer than flax plants, and special hemp gripping machines are therefore known for harvesting hemp plants. For hemp plants it is also the case that, after being gripped and optionally cut into smaller pieces, they are placed back down flat on the ground in order to allow retting of the plants. After the hemp plants have been turned one or more times during the retting process using a turner the plants can be further processed, for instance by picking them up again and baling them in a baler.

A drawback of the known pick-up machines (i.e. gripping machines, turners and balers) is that they are often fairly unstable, which may lead to problems, such as problems with stability and/or traction, particularly in the case of an uneven ground surface and/or an inclining ground surface.

A further drawback of the known pick-up machines is that their turning circle is relatively large, which makes it difficult to achieve a 180 degree turn of the pick-up machine at the end of each row, especially if little ground surface area is available there.

A further drawback of the known pick-up machines is that said intermediate space between adjoining rows of fibre plants which have been gripped and placed back down on the ground is often small. The small intermediate space may cause fibre plants of adjacent rows to become tangled in each other, which impedes the pick-up process which follows later. The risk of the wheels of the pick-up machines driving over the fibre plants during a subsequent processing round (for instance a turner which will turn the fibre plants after these have been gripped by a gripping machine) is then further relatively high. These plants may become damaged hereby, this reducing the quality of the plants.

It is an object of the present invention to at least partially obviate at least one of the above stated drawbacks.

According to a first aspect, this object is achieved at least partially in a processing machine of the type stated in the preamble, the processing machine comprising a self-propelling vehicle comprising an elongate chassis, a pick-up unit which is mounted on a first end of the chassis and is configured to pick up fibre plants during travel of the vehicle, transport means for transporting the picked-up fibre plants from the first end of the chassis to the second, opposite end of the chassis, and delivering means for delivering the gripped and transported fibre plants at the second end, wherein the chassis comprises:
- a first chassis part configured for mounting of the pick-up unit and at least a part of the transport means, also provided with a suspension for two front wheels;
- a second chassis part configured for mounting of the delivering means and at least a part of the transport means, also provided with at least a suspension for two rear wheels;
- a pivot element mounted between the first and second chassis part for the purpose of making the first and second chassis parts pivotable relative to each other about an imaginary or physical upright pivot axis.

The ability of the vehicle to pivot enables the turning circle to be limited. It is further possible to place the fibre plants at a better position behind the vehicle, which will be elucidated below.

The vehicle is configured to pivot the second chassis part between a first pivot position in which the first and second chassis parts extend mutually in line and a second pivot position in which the second chassis part extends obliquely relative to the first chassis part. It is for instance possible to travel in so-called crab-steered manner. In the case of crab steering the two front wheels in principle run in a different track than the rear wheels, while the mutual distance between the rear wheels and between the front wheels (i.e. the (imaginary) axle length) remains the same in principle. When the vehicle travels for instance straight ahead in a determined direction, the longitudinal direction (i.e. the axial direction) of the first chassis part will extend in this determined direction, but the pivoted second chassis part will lie obliquely relative to this direction. This has the advantage that the picked-up fibre plants can be placed on the ground in a laterally offset position. This is also referred to as offsetting of the fibre plants. This can create intermediate space between the edge of the as yet ungripped part of the ground and the edge of the line of fibre plants placed onto the ground.

The vehicle is provided with two (or more) front wheels and two (or more) rear wheels.

The chassis can be configured to allow the second chassis part to pivot between a first pivot position in which the axial direction of the first chassis part is parallel to the axial direction of the second chassis part and a second pivot position in which the axial direction of the second chassis part lies obliquely relative to the axial direction of the first chassis part. In determined embodiments the pivot position can be realized in continuously variable manner. This also means that it is possible to have the offsetting of the fibre plants take place as desired: if more intermediate space is desired, the angle of pivot will be made greater, while the angle of pivot can remain smaller when less intermediate space can suffice. It is also possible to make the angle of pivot zero, in which case the second chassis part is aligned with the first chassis part.

It has been found that particularly good results in respect of manoeuvrability, ease of handling and/or stability of the vehicle and/or a relatively small risk of damaging the fibre plants with the wheels can be achieved if the chassis is configured such that the second chassis part can pivot relative to the first chassis part between a first pivot position in which the angle between the axial directions of respectively the first and second chassis part amounts to a maximum of 4 degrees and a second pivot position in which said angle amounts to between 5 and 30 degrees, preferably between 10 and 20 degrees, still more preferably about 15 degrees.

In order to maintain a stable vehicle, also when the first and second chassis parts are pivoted relative to each other, it is preferred for the pivot element to be positioned centrally in lateral direction and/or to be arranged between the front and rear wheels in axial direction. In this latter case a position just behind that of the front wheels is a good position. The pivot element preferably forms the only real structural coupling between the first and second chassis part, so that the second chassis part can in fact rotate freely relative to the first chassis part.

In determined embodiments there is only one rotation option of the second chassis part relative to the first chassis part, this being about an optionally imaginary upright rotation axis (for instance a vertical axis when the vehicle is on a flat, horizontal ground surface). In other embodiments it is however also possible to rotate about an optionally imaginary lying rotation axis which extends transversely of the upright axis and substantially in longitudinal direction of the vehicle. This latter rotation axis makes it possible to allow the second chassis part to "roll", i.e. rotate about its longitudinal axis.

The suspension of the front wheels is embodied such that the front wheels can pivot (in other words, the front wheels can be steered). The suspension of the rear wheels is also embodied in this way. The suspension of the rear wheels is more particularly configured to be able to steer the pivoting about the second chassis part relative to the first chassis part, for instance in order to place the rear chassis part obliquely in said second pivot position relative to the front chassis part. The suspension of the front wheels and rear wheels can further be configured such that each of the front wheels and rear wheels can be pivoted independently of each other. In other embodiments the two front wheels are pivoted simultaneously and/or the two rear wheels are pivoted simultaneously. Steering units can be provided for pivoting the wheels. These steering units can for instance comprise hydraulic actuators which are coupled to a hydraulic pump unit.

In order to transport the picked-up fibre plants from the pick-up unit at the front end of the vehicle to the rear end, irrespective of the pivot position of the second chassis part, the transport means are divided into a number of successive conveyors. These conveyors are arranged such that the fibre plants can be transferred from one conveyor to the other conveyor in simple manner without the transport being impeded to any significant extent by the mutual pivot position of the chassis parts and/or by a change in the pivot position during travel of the vehicle. In determined embodiments the transport means comprise a first endless conveyor mounted on the first chassis part and a second endless conveyor mounted on the second chassis part. A delivering unit is further provided at the rear end of the second chassis part. In the shown embodiment the delivering unit comprises two parallel endless conveyor belts extending obliquely downward so that the transported fibre plants can be placed flat on the ground surface in controlled manner.

The pick-up unit can be custom-made especially for a determined processing step. The pick-up unit can for instance be a gripping unit for picking fibre plants from the ground. The pick-up unit can however also be aimed at a different processing step. The pick-up unit can for instance be a pick-up unit configured to pick up fibre plants already gripped and placed down on the ground surface previously. In a particularly advantageous embodiment the pick-up units are interchangeable and the vehicle can be prepared for performing the desired processing step by mounting the correct pick-up unit. In a determined embodiment the pick-up unit is coupled in releasable manner to the first chassis part. The vehicle can further be configured such that, no matter which pick-up unit is used (a gripping unit for flax, a gripping unit for hemp, a pick-up unit for flax, a pick-up unit for hemp, and so on), the rest of the vehicle can remain wholly or largely unchanged. In other words, the transport means on the chassis and/or the delivering unit can remain unchanged in principle, whether they are applied to transport flax or to transport hemp.

A drive is provided for advancing the vehicle. This drive is configured to drive each of the wheels independently (i.e. each of the front wheels and rear wheels). It is otherwise also possible to drive the front wheels independently of the rear wheels. In the most preferred case the rotation of all four wheels can be driven individually and each of the wheels can also be steered (i.e. pivoted) individually.

The drive can for instance comprise a hydraulic pump unit driven by a power source. The hydraulic pump unit is connected to four drive units, one drive unit for each wheel. The processing machine more particularly comprises a first drive unit coupled to the first front wheel and configured to drive the first front wheel, a second drive unit coupled to the second front wheel and configured to drive the second front wheel, a third drive unit coupled to the first rear wheel and configured to drive the first rear wheel, and a fourth drive unit coupled to the second rear wheel and configured to drive the second rear wheel.

The drive is further configured to substantially continuously vary the torque transmitted to the front and rear wheels by the drive units independently of each other. The first and second drive units can for instance be configured to vary the torque transmitted to the first rear wheel by the first drive unit and to the second rear wheel by the second drive unit independently of each other and in continuous manner. Varying can here mean transmitting more or less torque to the individual rear wheels, which is for instance realized in a determined type of drive by controlling the stroke volume and the adjusting plate of the drive. Each wheel is optionally also provided with a transmission mechanism whereby the transmission ratio between the hydraulic drive motor and the relevant wheel can be varied, as will be elucidated below.

The drive units can comprise respective hydraulic drive motors, wherein each of the hydraulic drive motors preferably comprises a variable displacement bent-axis piston motor. In these hydraulic motors hydraulic energy is converted into mechanical energy in order to rotate the wheels. The hydraulic motors are driven via a hydraulic medium of a closed hydraulic circuit. Different types of hydraulic motor can be utilized. In determined embodiments the hydraulic motors are of the bent-axis piston motor type, preferably of a type wherein the angle of the axis is continuously variable (i.e. a variable displacement bent-axis piston motor). The stroke volume of these motors can be adjusted by tilting the adjusting plate provided therein to greater or lesser extent or, preferably, by varying the angle between the longitudinal direction of the pistons and the longitudinal direction of the driven shaft. Adjusting means for adjusting the angle between the displacement direction of the pistons and the longitudinal direction of the driven shaft can be provided for this purpose. In a particularly advantageous embodiment each of the hydraulic motors for driving the rear wheels is formed by a bent-axis piston motor with variable displacement. The adjusting means are further preferably embodied to enable a continuously variable adjustment of the angle and/or an adjustment of the angle through a relatively great angular range (such as an angular range of about 0-40 degrees). Such motors are able to generate a relatively high rotation speed. In combination with a transmission mechanism, for instance a planetary final drive, this generates a relatively high torque.

In embodiments of the invention the second chassis part has at least one rear wheel on a left-hand side of the second chassis part and at least one rear wheel on a right-hand side of the second chassis part. The second steering unit can here comprise a first actuator, mounted on the second chassis part and a rear left wheel, and a second actuator, mounted on the second chassis part and a rear right wheel, wherein the actuators preferably comprise a hydraulic extending cylinder.

The two actuators can be controlled individually or collectively, while in determined embodiments the two actuators can be combined into a single actuator. In other words, the first and second actuators can be configured to pivot the first rear wheel and the second rear wheel independently of each other. In other embodiments the first and second actuator are configured to pivot the first rear (left) wheel and second rear (right) wheel collectively and synchronously.

In embodiments of the invention the first steering unit is constructed in similar manner for the purpose of pivoting a first front (left) wheel and a second front (right) wheel. The two front wheels can be pivoted collectively and synchronously to each other, whereas in other embodiments the first front wheel can be pivoted independently of the second front wheel.

In further embodiments the processing machine comprises a single rear axle which is mounted pivotally on the at least one rear wheel on the left-hand side of the second chassis part and the at least one rear wheel on the right-hand side of the second chassis part, wherein the rear axle and the rear wheels mounted thereon are further arranged via at least a central pivot member on the second chassis part for pivoting around an imaginary or physical lying pivot axis extending in longitudinal direction of the second chassis part. In an alternative or further embodiment the rear axle is also arranged rotatably on the second chassis part for pivoting about an imaginary or physical upright pivot axis. The rear axle can thus co-rotate at a central point of rotation. In specific embodiments said rear axle is a swing axle or swinging axle. Such a swing axle or swinging axle can hinge/pivot around a longitudinally extending pivot axis arranged at a central position between the rear wheels.

Although in the embodiments as shown in the figures the vehicle has four wheels, i.e. two front wheels and two rear wheels, this number can be different in other embodiments. In determined embodiments two or more wheels are placed mutually adjacently: for instance two or more front right wheels, two or more rear right wheels, two or more front left wheels and/or two or more rear left wheels.

Another aspect of the invention relates to the use of the processing machine. According to yet another aspect of the invention, a method is provided for processing fibre plants, particularly hemp or flax, the method comprising of pivoting the second chassis part relative to the first chassis part and driving the self-propelling vehicle over the ground in pivoted state for the purpose of picking up fibre plants along a first row with the pick-up unit on the first chassis part, transporting the picked-up fibre plants from the pick-up unit to the delivering means of the second chassis part and delivering the picked-up and transported fibre plants along a second row with the delivering means, wherein the second row lies at a position offset in lateral direction transversely of the axial direction.

Further details, features and properties of the invention will be elucidated on the basis of the following description of several embodiments thereof. Reference is made in the description to the figures, in which:
Figure 1 is a schematic perspective side view of an embodiment of the fibre plant processing machine described herein;
Figures 2 and 3 are schematic perspective bottom views of the embodiment of figure 1, respectively in a first pivot position in which the second chassis part is aligned with the first chassis part and a second pivot position in which the second chassis part is arranged obliquely relative to the first chassis part and the chassis forms as it were an articulated chassis;
Figure 4 is a detail view of an embodiment of the pivot element described herein;
Figures 5 and 6 are schematic perspective bottom views of the embodiment of figures 2 and 3 in respectively said first pivot position and second pivot position;
Figures 7 and 8 are schematic top views of a first and second manner of processing fibre plants in a field;
Figures 9 and 10 are perspective views of the rear wheel suspension of the rear wheels of the second chassis part, including a steering unit for steering the wheels and a pivotable rear axle, according to an embodiment, as seen from a position on respectively the front and rear side of the chassis part; and
Figure 11 is a perspective view of another embodiment of the rear wheel suspension of the rear wheels of the second chassis part, including a steering unit for steering the wheels and a pivotable rear axle.

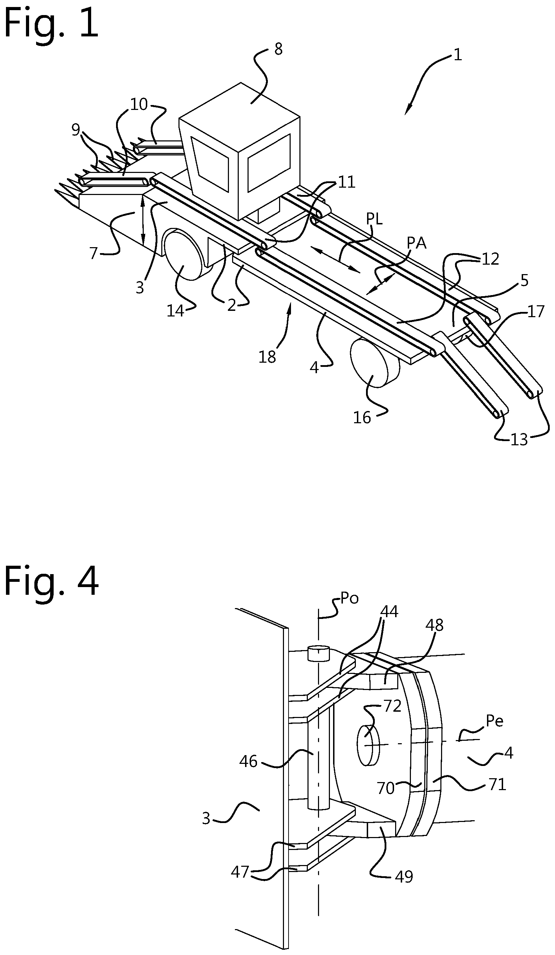

Figures 1-3, 5 and 6 show an embodiment of a processing machine 1 comprising a pick-up unit 7 for picking up fibre plants (not shown), which is mounted on the front end of a self-propelling vehicle 18. The vehicle is self-propelling in the sense that the vehicle is provided with its own drive enabling it to advance over the ground surface independently. No further vehicle, such as a tractor or the like, is therefore needed to advance the vehicle over the ground surface.

In the shown embodiment pick-up unit 7 is embodied as gripping unit for gripping fibre plants growing in a ground and for carrying the gripped fibre plants to a conveyor 10. The vehicle functions here as gripping machine. For this purpose the gripping unit is provided at the front end of chassis 2 with a number of gripping elements which extend in axial direction (P_{A}) and whereby the fibre plants are gripped and are pulled from the ground during travel. Differences may occur here between a gripping unit suitable for gripping flax and a gripping unit suitable for gripping hemp. Hemp is for instance longer than flax and requires a cutting operation wherein the hemp plant is cut into two (or more) parts before being carried to the transport means on the chassis.

In other embodiments the pick-up unit 7 is a pick-up unit which is configured precisely to pick up fibre plants, such as flax or hemp, already gripped and placed flat on the ground surface at an earlier stage.

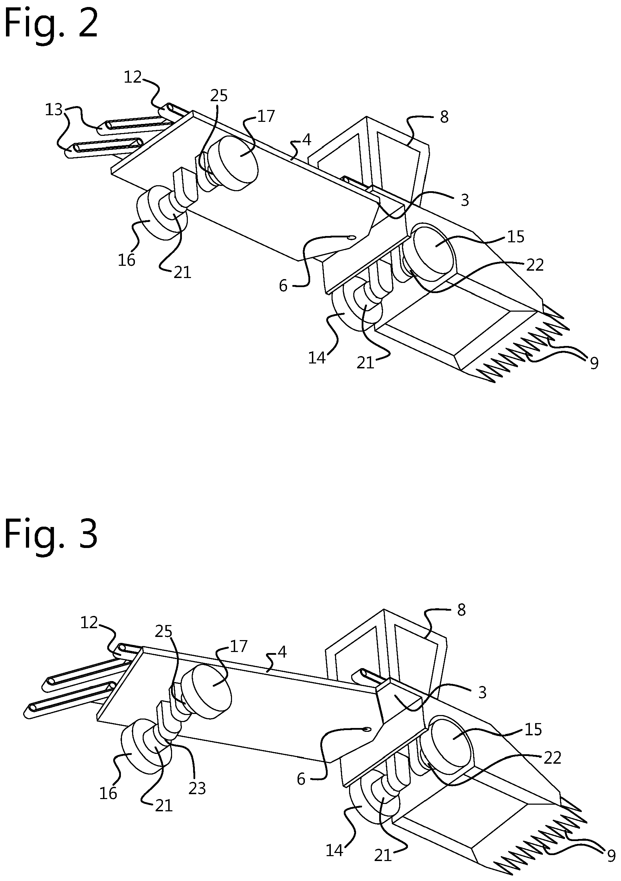

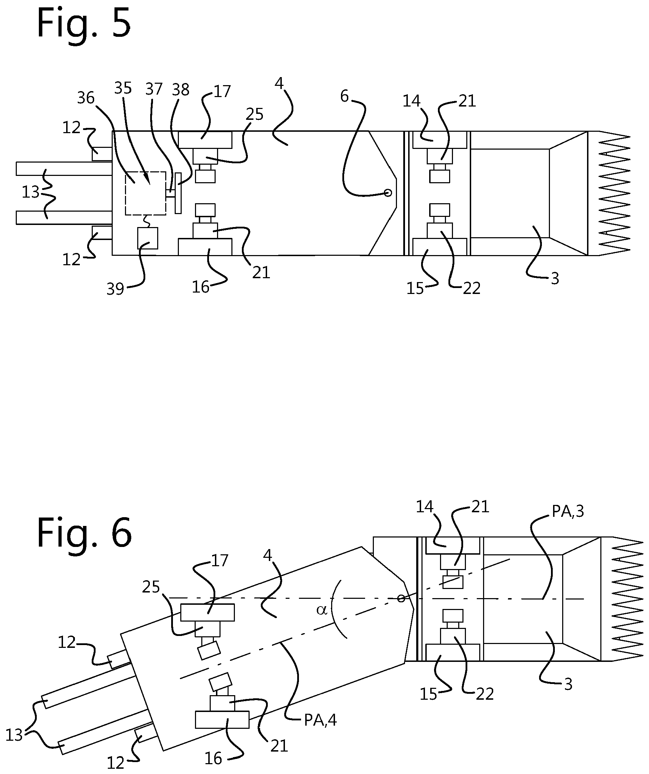

Chassis 2 comprises a first (in the shown embodiment a front) chassis part 3, a second (in the shown embodiment a rear) chassis part 4 and a coupling in the form of a pivot element 6 arranged between the two chassis parts 3 and 4. Pivot element 6 enables the first and second chassis parts to be made pivotable relative to each other about an imaginary or physical upright pivot axis (i.e. in the position of the vehicle shown in figure 1 a vertical pivot axis). As can be seen in figures 2, 3, 5 and 6, the second chassis part 4 can be pivoted into different positions relative to the first chassis part 3. The degree of pivoting can be expressed in the size of the angle (α), which is defined as the angle between the imaginary centre line in the axial direction (PA3) of first chassis part 3 and the imaginary centre line in the axial direction (PA4) of second chassis part 4, as shown in figure 6.

In figures 2 and 5 the two chassis parts 3 and 4 are in principle aligned (i.e. the angle of pivot (α) is about 0 degrees), while in figures 3 and 6 the second chassis part 4 has been pivoted in clockwise direction (as seen from above) through an angle of pivot (α). This pivoting is in principle continuously variable and, although only two pivot positions are shown in figures 2 and 3, second chassis part 4 can also be pivoted to any intermediate position or further position, in practice to a maximum angle of pivot (αₘₐₓ) of 60 degrees or slightly more.

Figures 1-3 further show that second chassis part 4 comprises a spreading table or conveyor table 5. The picked-up fibre crop can rest on this table 5 temporarily. A conveyor 12 in the form of two parallel driven endless belts is arranged on this spreading or conveyor table 5. The lateral distance (i.e. the distance in lateral direction P_{L}, transversely of the axial direction P_{A} which corresponds to the direction of the longitudinal axis of vehicle 18) is here just slightly smaller than the length of the fibre plants, so that a fibre plant resting on the two conveyor belts can be transported quickly and reliably to the rear end of chassis 2, i.e. to the rear end of second chassis part 4. The fibre plants come from a conveyor 10 of pick-up unit 7 and a further conveyor 11 of first chassis part 4. It is also shown that delivering means 13 in the form of two further driven endless conveyor belts arranged at a determined angle of inclination are situated at the rear end of the second chassis part. With these delivering means the supplied fibre crop can be neatly placed flat on the ground in controlled manner.

The vehicle advances on two front wheels 14 and 15 which are mounted on first chassis part 3 via a suspension 20, and two rear wheels 16 and 17 which are arranged on second chassis part 4 via a suspension 23. Each of the wheels is driven independently. Front wheels 14, 15 are driven with respective drive units 21 and 22, while rear wheels 16 and 17 are driven with respective drive units 24 and 25. Each of the drive units is integrated with the associated wheel: drive unit 21 with front left wheel 14, drive unit 22 with front right wheel 15, drive unit 24 with rear left wheel 16 and drive unit 25 with rear right wheel 17. More specifically, in determined embodiments each drive unit can be mounted on the inner side (i.e. on the side directed toward the centre of the vehicle) of the relevant wheel. In the shown embodiment the drive units 21, 22, 24, 25 are formed by hydraulic axial piston motors, although it is also possible to use other types of hydraulic motor.

The power for the drive units comes from a power source 35 (shown schematically in figure 5), for instance in the form of a diesel engine 36 which is mounted on second chassis part 3 and the rotatable output drive shaft 37 of which is coupled to a hydraulic pump unit 38. Hydraulic pump unit 38 is configured to place a hydraulic medium under pressure and to transport the medium through a hydraulic circuit (not shown). The pump pressure produced by hydraulic pump unit 38 can optionally be varied by means of adjusting means (not shown) such as a hydraulic and/or electric adjusting mechanism. Hydraulic pump unit 38 is connected via the hydraulic circuit to the four individual drive units 21, 22, 24, 25.

Drive units 21, 22, 24, 25 are connected to a collective electronic control unit 39 (figure 5), for instance an electronic control unit (ECU), for the purpose of driving each of the hydraulic drive motors. In embodiments wherein the hydraulic drive motors are formed by variable displacement bent-axis piston motors the control unit 39 can be connected to adjusting means which are provided thereon and are configured to adjust the torque supplied by the relevant drive motor and the rotation speed of the output shaft.

Control unit 39 is also connected to steering means whereby each of the wheels 14-17 can be steered individually (or, in other embodiments, whereby the two front wheels 14, 15 can be steered collectively and/or the two rear wheels 16, 17 can be steered collectively). For instance provided in determined embodiments is a steering unit for controlling the pivot position of front left wheel 14 and a second steering unit for controlling the pivot position of front right wheel 15. Likewise, a third and fourth steering unit are provided for the purpose of controlling the pivot position of respectively the rear left wheel 16 and rear right wheel 17.

In determined embodiments a planetary transmission (not shown), herein also referred to as a epicyclic transmission, can be arranged between each of the drive motors and the associated wheel. With this transmission the ratio between the rotation speed of the drive motor and the wheel can be adjusted as desired, preferably by controlling the control unit 39. An advantage of such a planetary transmission is that it takes up relatively little space and can thus be built in in simple manner, and that a relatively high transmission ratio can be realized (especially in relation to the limited dimensions).

The pivot element 6 between the two chassis parts 3, 4 is shown in more detail in figure 4. It is shown that a number of lying parallel flanges is arranged on first chassis part 4: two upper parallel flanges 44 and two parallel lower flanges 45. On the side of second chassis part 4 the pivot element 6 is further provided with an upper lying flange 48 and a lower lying flange 49. All flanges are provided with openings into which a physical upright shaft 46 (in the shown position of the vehicle a vertical upright shaft) has been inserted. This construction ensures that the second chassis part 4 can be pivoted around the upright shaft 46. In the shown embodiment pivot element 6 is further also embodied to enable a pivoting around a lying axis. Rear chassis part 4 can hereby "roll" relative to front chassis part 3. The rolling movement is enabled by two upright flanges 70, 71 which are mutually connected via a lying rotation shaft 72.

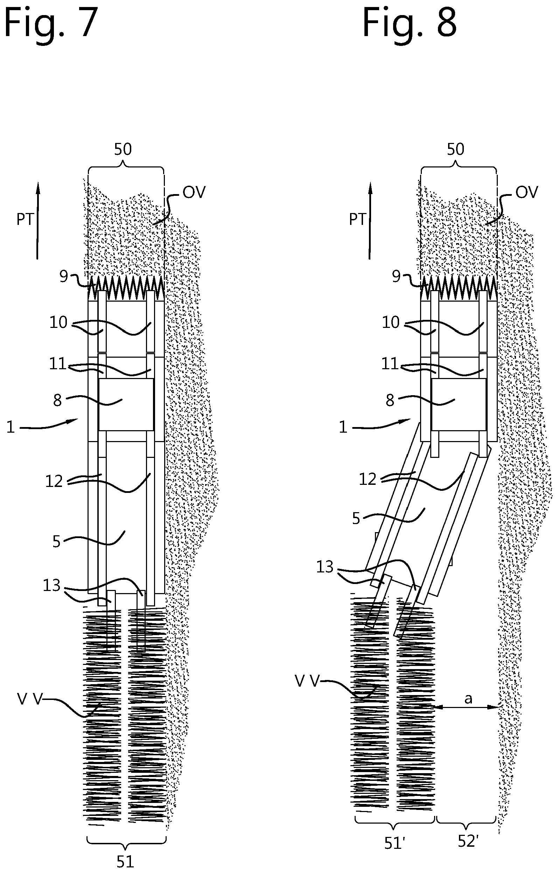

Figures 7 and 8 show two ways of utilizing the processing machine 1 according to the described embodiments. Figure 7 shows the situation in which fibre plants are gripped while the vehicle is in a pivot position in which the rear chassis part 4 lies in one axial line with the front chassis part 3 (wherein the two chassis parts are therefore aligned relative to each other). When the vehicle advances (direction P_{T}), gripping unit 7 at the front end of vehicle 18 will grip a first row 50 of (unprocessed) fibre plants OV. The gripped fibre plants are then transported rearward over chassis 2, after which the gripped and transported fibre plants (which have come to lie neatly parallel to each other during the transport) are placed on the ground in a second row 51 via a delivering unit 13. As can be seen in the figure, the thus processed fibre plants VV lie in a second row 51 which is situated in lateral direction very close to the as yet ungripped portion of the fibre plants. There is in fact no or hardly any intermediate space between the second row 51 and the fibre plants which have not yet been gripped (depending on the width of gripping unit 7 in relation to the length of the gripped fibre plants).

In the shown embodiment each row 51 otherwise comprises two mutually adjacent lines of fibre plants. Gripped flax plants have a length of about 1.2 to 1.3 m, while gripped hemp plants are longer. This is why hemp plants are cut in two so that the length of the cut hemp plants also amounts to about 1.2 m. The operating width of the vehicle generally lies in the order of magnitude of 2.6 m.

Figure 8 shows the situation in which the second chassis part 4 has come to lie obliquely relative to the first (front) chassis part 3 by steering of the rear wheels using the steering means and/or by individual driving of these rear wheels. Rear wheels 16, 17 are pivoted such that they extend in the direction of displacement PT of vehicle 18 (just as front wheels 14, 15; in other words, all wheels are now oriented in the same direction irrespective of the oblique position of second chassis part 4 relative to first chassis part 3). The different conveyors 10, 11, 12 (and the delivering unit 13) are here embodied such that the fibre plants can be placed back on the ground neatly side-by-side on the rear side of the vehicle. If vehicle 18 functions in this way, the second row 51' lies at a position offset in lateral direction transversely of the axial direction, as shown in figure 8. This frees up an additional row 52, at least an extra wide row 52. The width (a) of this row is preferably greater than the width of the front and rear right wheels 15, 17 to such an extent that the next time the vehicle passes the fibre plants, the front wheels can remain wholly in this additional row 52 and the risk of wheels 15, 17 driving over fibre plants lying on the ground is minimal.

Figure 6 shows that the drive units 21, 25 and the associated rear wheels 16, 17 can be actively pivoted relative to rear chassis part 4. Both wheels 16, 17 are pivotable (for steering) about an imaginary vertical axis, wherein the rear right wheel 17 is pivoted forward and the rear left wheel 16 is pivoted rearward. The figure shows the situation in which rear chassis part 4 has pivoted into a desired oblique position and the vehicle travels on while keeping rear chassis part 4 in the shown oblique position. It will be apparent that rear chassis part 4 can also be placed in any other oblique position in the same way.

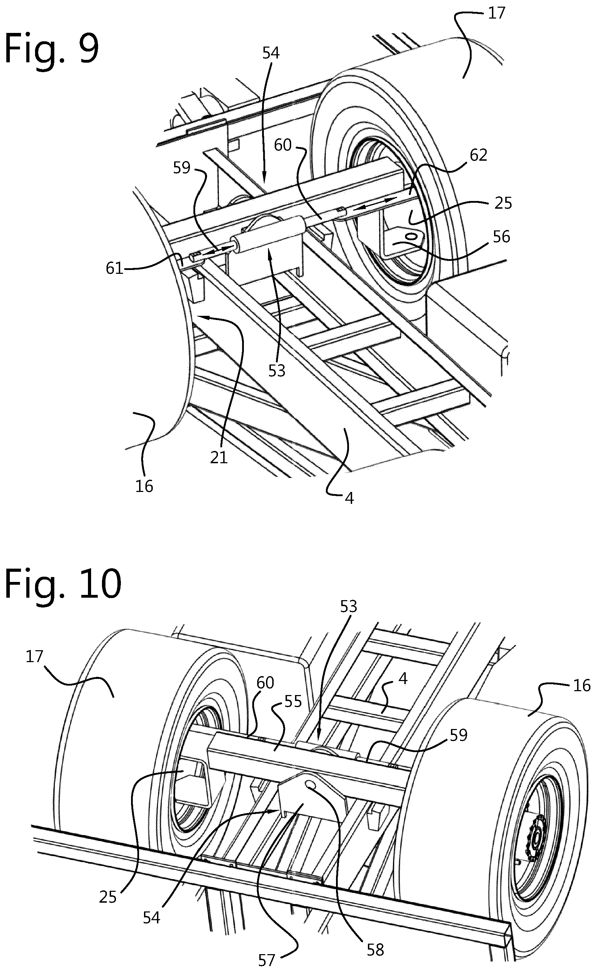

Figures 9 and 10 show more detailed views of ways in which such a pivoting of rear wheels 16, 17 can be realized. The figures show an embodiment of steering unit 53 and associated wheel suspension 54 of second chassis part 4. The drive unit 21 of rear left wheel 16 is coupled pivotally to a first outer end of rear axle 55 using a substantially U-shaped hinge, while drive unit 25 of rear right wheel 17 is coupled pivotally to the second, opposite outer end of rear axle 55 using U-shaped hinge 56. In the shown embodiment the rear axle is a swing axle. This is mounted via one or more central supports 57 on the frame of rear chassis part 4 for pivoting ("swinging"). The pivot shaft 58 extends substantially in horizontal longitudinal direction of the vehicle so that rear axle 55 can pivot upward and downward via a central position, as seen laterally, for the purpose of compensating for the ground unevennesses of the ground over which the vehicle travels. Further provided are two actuators 59, 60. In the shown embodiment each of the actuators is formed by an extending cylinder. The extending cylinder 60 has a first outer end attached to (a central part of) rear chassis part 4 (for instance with said central support 57) and an opposite outer end attached via a pivotable frame part 62 to an associated drive unit 25 and/or an associated wheel 17. Extending cylinder 59 also has a first outer end attached to (a central part of) rear chassis part 4 (for instance with said central support 57) and has an opposite outer end attached via a pivotable frame part 61 to an associated drive unit 21 and/or an associated wheel 16. Extending or retracting of a cylinder 59, 60 (in substantially lateral directions, see arrows in figure 9) results in a corresponding pivoting of the relevant rear wheel 16, 17.

Each of the actuators 59, 60 can make the associated rear wheel 16, 17 pivot. Together, actuators 59, 60 form the steering unit 53 whereby the position of rear wheels 16, 17 can be adjusted as desired. In the shown embodiment the actuators 59, 60 can be operated individually so that the one rear wheel 16 can in principle be pivoted independently of the other rear wheel 17. In other embodiments the two actuators 59, 60 are operated simultaneously, or there is a single, integrated actuator (for instance a double-acting extending cylinder) whereby the two wheels 16, 17 are pivoted synchronously with each other. Actuators 59, 60 can further be embodied as hydraulic or pneumatic actuators, which are for instance connected to the rest of the hydraulic system of the vehicle.

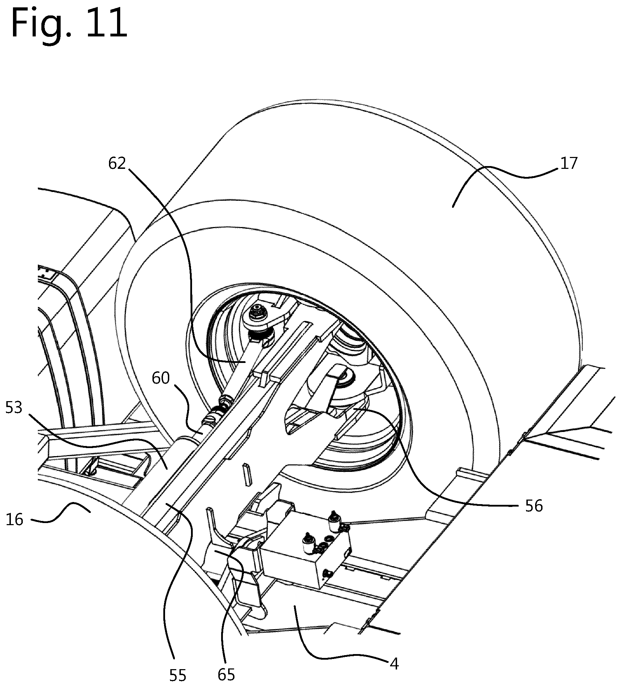

Figure 11 shows an embodiment of the steering unit and wheel suspension which corresponds to that of the above-described embodiment of figures 9 and 10 with the exception of a few differences. In figure 11 the reference numerals designate the same components, and an extensive description of each of these components has been omitted here for simplicity of description. The shown embodiment comprises the steering unit 53 and the associated wheel suspension 54. The drive unit 25 (not shown) of rear right wheel 17 is coupled pivotally to a first outer end of rear axle 55 using said substantially U-shaped hinge 56, while the drive unit of the rear left wheel is likewise coupled pivotally to the second, opposite outer end of rear axle 55 via a U-shaped hinge. Rear axle 55 is mounted pivotally on chassis part 4 via a shaft housing 65 with therein a pivot shaft 58 extending substantially in horizontal longitudinal direction of the vehicle so that rear axle 55 can pivot reciprocally to some extent. Said two actuators 59, 60 (of which only actuator 60 is shown in the drawing) are once again formed by extending cylinders. The extending cylinder 60 has a first outer end attached to (a central part of) rear chassis part 4 (for instance with said central support 57) and an opposite outer end attached via a pivotable frame part 62 to the associated drive unit and/or the associated wheel 17. By retracting or extending the extending cylinder (preferably a hydraulic extending cylinder connected to the hydraulic system of the vehicle and controlled by the driver in the cab of the vehicle) the relevant rear wheel 17 can be pivoted to the left or to the right and rear chassis part 4 can in this way be steered as desired.

The present invention is not limited to the embodiments described here. The scope of protection is defined by the following claims, within the scope of which numerous modifications and adjustments can be envisaged.

## Claims

1. Processing machine (1) for processing fibre plants, particularly hemp or flax, the processing machine comprising a self-propelling vehicle comprising an elongate chassis (2), a pick-up unit (7) which is mounted on a first end of the chassis and is configured to pick up fibre plants during travel of the vehicle, transport means for transporting the picked-up fibre plants from the first end of the chassis to the second, opposite end of the chassis, and delivering means (13) for delivering the gripped and transported fibre plants at the second end, wherein the chassis comprises:
- a first chassis part (3) configured for mounting of the pick-up unit and at least a part of the transport means, also provided with a suspension for two front wheels (14, 15);
- a second chassis part (4) configured for mounting of the delivering means and at least a part of the transport means, also provided with at least a suspension for two rear wheels (16, 17);
- a pivot element (6) mounted between the first and second chassis part for the purpose of making the first and second chassis parts pivotable relative to each other about an imaginary or physical upright pivot axis;
**characterised in that** the machine further comprises:
- a first steering unit for controlling the pivot position of the front wheels provided on the first chassis part; and
- a second steering unit for controlling the pivot position of rear wheels provided on the second chassis part.

2. Processing machine according to claim 1, configured to pivot the second chassis part between a first pivot position in which the first and second chassis parts extend mutually in line and a second pivot position in which the second chassis part extends obliquely relative to the first chassis part and/or wherein the chassis is configured to allow the second chassis part to pivot between a first pivot position in which the axial direction of the first chassis part is parallel to the axial direction of the second chassis part and a second pivot position in which the axial direction of the second chassis part lies obliquely relative to the axial direction of the first chassis part.

3. Processing machine according to any one of the foregoing claims, wherein the chassis is configured such that the second chassis part can pivot relative to the first chassis part between a first pivot position in which the angle between the axial directions of respectively the first and second chassis part amounts to a maximum of 4 degrees and a second pivot position in which said angle amounts to between 5 and 30 degrees, preferably between 10 and 20 degrees, still more preferably about 15 degrees.

4. Processing machine according to any one of the foregoing claims, wherein the pivot element is positioned centrally in lateral direction and/or is arranged between the front and rear wheels in axial direction and/or wherein the pivot element is also configured to allow the first and second chassis part to pivot relative to each other about an imaginary or physical lying axis in axial direction of the first chassis part or the second chassis part, substantially transversely of the upright axis.

5. Processing machine according to any one of the foregoing claims, wherein both the suspension of the front wheels and the suspension of the rear wheels are configured to enable a change in the position of respectively the front and rear wheels relative to the axial directions of respectively the first and second chassis part and/or wherein the suspension of the front wheels and rear wheels is configured to pivot each of the front wheels and rear wheels independently of each other.

6. Processing machine according to any one of the foregoing claims, wherein the second steering unit is configured to adjust the pivot position of the rear wheels to the pivot position of the second chassis part and/or wherein the transport means comprise a first endless conveyor mounted on the first chassis part and a second endless conveyor mounted on the second chassis part.

7. Processing machine according to any one of the foregoing claims, wherein the pick-up unit is a gripping unit for picking fibre plants from the ground and/or wherein the gripping unit is a hemp gripping unit configured to grip hemp plants and/or wherein the gripping unit is a flax gripping unit configured to grip flax.

8. Processing machine according to any one of the foregoing claims, wherein the pick-up unit is a pick-up unit for picking up fibre plants already gripped and placed down on the ground surface previously and/or wherein the pick-up unit is an interchangeable pick-up unit which is coupled in releasable manner to the first chassis part.

9. Processing machine according to any one of the foregoing claims, comprising a drive configured to drive each of the front wheels and rear wheels independently and/or wherein the drive comprises a hydraulic pump unit which is driven by a power source and to which are connected a first drive unit coupled to the first front wheel and configured to drive the first front wheel, a second drive unit coupled to the second front wheel and configured to drive the second front wheel, a third drive unit coupled to the first rear wheel and configured to drive the first rear wheel, and a fourth drive unit coupled to the second rear wheel and configured to drive the second rear wheel and/or comprising a drive which is configured to substantially continuously vary the torque transmitted to the front and rear wheels by drive units independently of each other, wherein the drive units optionally comprise respective hydraulic drive motors, wherein each of the hydraulic drive motors preferably comprises a variable displacement bent-axis piston motor, wherein the hydraulic drive motors preferably are integrated with the respective front and rear wheels.

10. Processing machine according to any one of the foregoing claims, comprising respective transmission mechanisms for each of the front wheels and each of the rear wheels, wherein the transmission mechanisms are coupled to respective hydraulic drive motors for the purpose of transmitting the rotation of the drive motor to the relevant front or rear wheel with at least a selected transmission ratio, wherein each of the transmission mechanisms preferably comprises a planetary transmission.

11. Processing machine according to any one of the foregoing claims, wherein the second chassis part has at least one rear wheel on a left-hand side of the second chassis part and at least one rear wheel on a right-hand side of the second chassis part, and wherein the second steering unit comprises:
- a first actuator, mounted on the second chassis part and a rear left wheel; and
- a second actuator, mounted on the second chassis part and a rear right wheel, wherein the actuators preferably comprise a hydraulic extending cylinder.

12. Processing machine according to any one of the foregoing claims, comprising a single rear axle which is mounted pivotally on the at least one rear wheel on the left-hand side of the second chassis part and the at least one rear wheel on the right-hand side of the second chassis part, wherein the rear axle and the rear wheels mounted thereon are further arranged via at least a central pivot member on the second chassis part for pivoting around an imaginary or physical lying pivot axis extending in longitudinal direction of the second chassis part, wherein the rear axle preferably comprises a swing axle or swinging axle.

13. Processing machine according to any one of the foregoing claims, wherein the rear wheels, particularly the at least one rear left wheel and the at least one rear right wheel, are combined into a single rear wheel positioned centrally in lateral direction.

14. Use of the processing machine according to any one of the foregoing claims for processing fibre plants.

15. Method for processing fibre plants, particularly hemp or flax, with a processing machine according to any one of the claims 1-13, the method comprising of pivoting the second chassis part relative to the first chassis part and driving the self-propelling vehicle over the ground in pivoted state for the purpose of picking up fibre plants along a first row with the pick-up unit on the first chassis part, transporting the picked-up fibre plants from the pick-up unit to the delivering means of the second chassis part and delivering the picked-up and transported fibre plants along a second row with the delivering means, wherein the second row lies at a position offset in lateral direction transversely of the axial direction, the method optionally comprising of controlling the pivot position of the rear wheels provided on the second chassis part with a steering unit and thus making the second chassis part pivot relative to the first chassis part.

## Patentansprüche

1. Verarbeitungsmaschine (1) zum Verarbeiten von Faserpflanzen, insbesondere Hanf oder Flachs, die Verarbeitungsmaschine umfassend ein Fahrzeug mit Eigenantrieb, umfassend ein längliches Fahrgestell (2), eine Aufnahmeeinheit (7), die an einem ersten Ende des Fahrgestells montiert ist und konfiguriert ist, um Faserpflanzen während einer Bewegung des Fahrzeugs aufzunehmen, Transportmittel zum Transportieren der aufgenommenen Faserpflanzen von dem ersten Ende des Fahrgestells zu dem zweiten, gegenüberliegenden Ende des Fahrgestells, und Abgabemittel (13) zum Abgeben der gegriffenen und transportierten Faserpflanzen an dem zweiten Ende, wobei das Fahrgestell umfasst:
- ein erstes Fahrgestellteil (3), das zum Montieren der Aufnahmeeinheit und mindestens eines Teils der Transportmittel konfiguriert ist, das ebenso mit einer Aufhängung für zwei Vorderräder (14, 15) bereitgestellt ist;
- ein zweites Fahrgestellteil (4), das zum Montieren der Abgabemittel und mindestens eines Teils der Transportmittel konfiguriert ist, das ebenso mit mindestens einer Aufhängung für zwei Hinterräder (16, 17) bereitgestellt ist;
- ein Schwenkelement (6), das zwischen dem ersten und dem zweiten Fahrgestellteil zum Zwecke montiert ist, das erste und das zweite Fahrgestellteil relativ zueinander um eine imaginäre oder physische aufrechte Schwenkachse herum schwenkbar zu machen;
**dadurch gekennzeichnet, dass** die Maschine ferner umfasst:
- eine erste Lenkeinheit zum Steuern der Schwenkposition der Vorderräder, die an dem ersten Fahrgestellteil bereitgestellt ist; und
- eine zweite Lenkeinheit zum Steuern der Schwenkposition von Hinterrädern, die an dem zweiten Fahrgestell bereitgestellt sind.

2. Verarbeitungsmaschine nach Anspruch 1, die konfiguriert ist, um das zweite Fahrgestellteil zwischen einer ersten Schwenkposition, in der sich das erste und das zweite Fahrgestellteil gemeinsam in einer Linie erstrecken, und einer zweiten Schwenkposition, in der sich das zweite Fahrgestellteil schräg relativ zu dem ersten Fahrgestellteil erstreckt, zu schwenken, und/oder wobei das Fahrgestell konfiguriert ist, um dem zweiten Fahrgestellteil zu ermöglichen, zwischen einer ersten Schwenkposition, in der die axiale Richtung des ersten Fahrgestellteils parallel zu der axialen Richtung des zweiten Fahrgestellteils ist, und einer zweiten Schwenkposition, in der die axiale Richtung des zweiten Fahrgestellteils schräg relativ zu der axialen Richtung des ersten Fahrgestellteils liegt, zu schwenken.

3. Verarbeitungsmaschine nach einem der vorstehenden Ansprüche, wobei das Fahrgestell derart konfiguriert ist, dass das zweite Fahrgestellteil relativ zu dem ersten Fahrgestellteil zwischen einer ersten Schwenkposition, in der der Winkel zwischen den axialen Richtungen des ersten beziehungsweise des zweiten Fahrgestellteils maximal 4 Grad beträgt, und einer zweiten Schwenkposition schwenken kann, in der der Winkel zwischen 5 und 30 Grad, vorzugsweise zwischen 10 und 20 Grad, noch mehr bevorzugt etwa 15 Grad, beträgt.

4. Verarbeitungsmaschine nach einem der vorstehenden Ansprüche, wobei das Schwenkelement in lateraler Richtung zentral positioniert ist und/oder zwischen den Vorder- und Hinterrädern in axialer Richtung angeordnet ist und/oder wobei das Schwenkelement ebenso konfiguriert ist, um dem ersten und dem zweiten Fahrgestellteil zu ermöglichen, relativ zueinander um eine imaginäre oder physische liegende Achse herum in axialer Richtung des ersten Fahrgestellteils oder des zweiten Fahrgestellteils, im Wesentlichen quer zu der aufrechten Achse, zu schwenken.

5. Verarbeitungsmaschine nach einem der vorstehenden Ansprüche, wobei sowohl die Aufhängung der Vorderräder als auch die Aufhängung der Hinterräder konfiguriert sind, um eine Änderung der Position der Vorder- beziehungsweise Hinterräder relativ zu den axialen Richtungen des ersten beziehungsweise des zweiten Fahrgestellteils zu ermöglichen und/oder wobei die Aufhängung der Vorderräder und der Hinterräder konfiguriert ist, um jedes der Vorderräder und der Hinterräder unabhängig voneinander zu schwenken.

6. Verarbeitungsmaschine nach einem der vorstehenden Ansprüche, wobei die zweite Lenkeinheit konfiguriert ist, um die Schwenkposition der Hinterräder auf die Schwenkposition des zweiten Fahrgestellteils einzustellen und/oder wobei die Transportmittel einen ersten Endlosförderer, der an dem ersten Fahrgestellteil montiert ist, und einen zweiten Endlosförderer, der an dem zweiten Fahrgestellteil montiert ist, umfassen.

7. Verarbeitungsmaschine nach einem der vorstehenden Ansprüche, wobei die Aufnahmeeinheit eine Greifeinheit zum Aufnehmen von Faserpflanzen von dem Boden ist und/oder wobei die Greifeinheit eine Hanfgreifeinheit ist, die konfiguriert ist, um Hanfpflanzen zu greifen und/oder wobei die Greifeinheit eine Flachsgreifeinheit ist, die konfiguriert ist, um Flachs zu greifen.

8. Verarbeitungsmaschine nach einem der vorstehenden Ansprüche, wobei die Aufnahmeeinheit eine Aufnahmeeinheit zum Aufnehmen von Faserpflanzen, die bereits gegriffen und zuvor auf der Bodenoberfläche abgelegt wurden, ist und/oder wobei die Aufnahmeeinheit eine austauschbare Aufnahmeeinheit ist, die in lösbarer Weise mit dem ersten Fahrgestellteil gekoppelt ist.

9. Verarbeitungsmaschine nach einem der vorstehenden Ansprüche, umfassend einen Antrieb, der konfiguriert ist, um jedes der Vorderräder und der Hinterräder unabhängig voneinander anzutreiben und/oder wobei der Antrieb eine Hydraulikpumpeneinheit umfasst, die durch eine Leistungsquelle angetrieben wird und mit der eine erste Antriebseinheit, die mit dem ersten Vorderrad gekoppelt und konfiguriert ist, um das erste Vorderrad anzutreiben, eine zweite Antriebseinheit, die mit dem zweiten Vorderrad gekoppelt und konfiguriert ist, um das zweite Vorderrad anzutreiben, eine dritte Antriebseinheit, die mit dem ersten Hinterrad gekoppelt und konfiguriert ist, um das erste Hinterrad anzutreiben, und eine vierte Antriebseinheit, die mit dem zweiten Hinterrad gekoppelt und konfiguriert ist, um das zweite Hinterrad anzutreiben, verbunden ist, und/oder umfassend einen Antrieb, der konfiguriert ist, um das Drehmoment, das durch Antriebseinheiten an die Vorder- und Hinterräder übertragen wird, im Wesentlichen kontinuierlich unabhängig voneinander zu variieren, wobei die Antriebseinheiten optional jeweilige Hydraulikantriebsmotoren umfassen, wobei jeder der Hydraulikantriebsmotoren vorzugsweise einen Schrägachsenverstellkolbenmotor umfasst, wobei die Hydraulikantriebsmotoren vorzugsweise mit den jeweiligen Vorder- und Hinterrädern integriert sind.

10. Verarbeitungsmaschine nach einem der vorstehenden Ansprüche, umfassend jeweilige Getriebemechanismen für jedes der Vorderräder und jedes der Hinterräder, wobei die Getriebemechanismen mit jeweiligen Hydraulikantriebsmotoren zum Zweck eines Übertragens der Rotation des Antriebsmotors an das betreffende Vorder- oder Hinterrad mit mindestens einer ausgewählten Getriebeübersetzung gekoppelt sind, wobei jeder der Getriebemechanismen vorzugsweise ein Planetengetriebe umfasst.

11. Verarbeitungsmaschine nach einem der vorstehenden Ansprüche, wobei das zweite Fahrgestellteil mindestens ein Hinterrad auf einer linken Seite des zweiten Fahrgestellteils und mindestens ein Hinterrad auf einer rechten Seite des zweiten Fahrgestellteils aufweist, und wobei die zweite Lenkeinheit umfasst:
- einen ersten Aktuator, der an dem zweiten Fahrgestellteil und einem linken Hinterrad montiert ist; und
- einen zweiten Aktuator, der an dem zweiten Fahrgestellteil und einem rechten Hinterrad montiert ist, wobei die Aktuatoren vorzugsweise einen Hydraulikausfahrzylinder umfassen.

12. Verarbeitungsmaschine nach einem der vorstehenden Ansprüche, umfassend eine einzige Hinterachse, die an dem mindestens einen Hinterrad auf der linken Seite des zweiten Fahrgestellteils und dem mindestens einen Hinterrad auf der rechten Seite des zweiten Fahrgestellteils schwenkbar montiert ist, wobei die Hinterachse und die daran montierten Hinterräder ferner über mindestens ein zentrales Schwenkelement an dem zweiten Fahrgestellteil zum Schwenken um eine imaginäre oder physische liegende Schwenkachse herum, die sich in Längsrichtung des zweiten Fahrgestellteils erstreckt, angeordnet sind, wobei die Hinterachse vorzugsweise eine Pendelachse oder eine pendelnde Achse umfasst.

13. Verarbeitungsmaschine nach einem der vorstehenden Ansprüche, wobei die Hinterräder, insbesondere das mindestens eine linke Hinterrad und das mindestens eine rechte Hinterrad, zu einem einzigen Hinterrad, das in lateraler Richtung zentral positioniert ist, kombiniert sind.

14. Verwendung der Verarbeitungsmaschine nach einem der vorstehenden Ansprüche zum Verarbeiten von Faserpflanzen.

15. Verfahren zum Verarbeiten von Faserpflanzen, insbesondere Hanf oder Flachs, mit einer Verarbeitungsmaschine nach einem der Ansprüche 1 bis 13, das Verfahren umfassend das Schwenken des zweiten Fahrgestellteils relativ zu dem ersten Fahrgestellteil und ein Antreiben des Fahrzeugs mit Eigenantrieb über den Boden in geschwenktem Zustand zum Zwecke des Aufnehmens von Faserpflanzen entlang einer ersten Reihe mit der Aufnahmeeinheit an dem ersten Fahrgestellteil, des Transportierens der aufgenommenen Faserpflanzen von der Aufnahmeeinheit zu den Abgabemitteln des zweiten Fahrgestellteils und des Abgebens der aufgenommenen und transportierten Faserpflanzen entlang einer zweiten Reihe mit den Abgabemitteln, wobei die zweite Reihe an einer Position, die in lateraler Richtung quer zu der axialen Richtung versetzt ist, liegt, das Verfahren optional umfassend das Steuern der Schwenkposition der Hinterräder, die an dem zweiten Fahrgestellteil bereitgestellt sind, mit einer Lenkeinheit und wobei somit das zweite Fahrgestellteil veranlasst wird, relativ zu dem ersten Fahrgestellteil zu schwenken.

## Revendications

1. Machine de traitement (1) permettant de traiter des plantes à fibres, en particulier du chanvre ou du lin, la machine de traitement comprenant un véhicule automoteur comprenant un châssis allongé (2), une unité de ramassage (7) qui est montée sur une première extrémité du châssis et est conçue pour ramasser des plantes à fibres pendant un déplacement du véhicule, un moyen de transport permettant de transporter les plantes à fibres ramassées de la première extrémité du châssis à la seconde extrémité opposée du châssis, et un moyen de distribution (13) permettant de distribuer les plantes à fibres saisies et transportées au niveau de la seconde extrémité, dans lequel le châssis comprend :
- une première partie de châssis (3) conçue pour le montage de l'unité de ramassage et d'au moins une partie du moyen de transport, également pourvue d'une suspension pour deux roues avant (14, 15) ;
- une seconde partie de châssis (4) conçue pour le montage du moyen de distribution et d'au moins une partie du moyen de transport, également pourvue d'au moins une suspension pour deux roues arrière (16, 17) ;
- un élément de pivot (6) monté entre la première et la seconde partie de châssis dans le but de rendre les première et seconde parties de châssis pivotantes l'une par rapport à l'autre autour d'un axe de pivot vertical imaginaire ou physique ;
**caractérisée en ce que** la machine comprend en outre :
- une première unité de direction permettant de commander la position de pivot des roues avant fournies sur la première partie de châssis ; et
- une seconde unité de direction permettant de commander la position de pivot des roues arrière fournies sur la seconde partie de châssis.

2. Machine de traitement selon la revendication 1, conçue pour faire pivoter la seconde partie de châssis entre une première position de pivot dans laquelle les première et seconde parties de châssis s'étendent mutuellement en ligne et une seconde position de pivot dans laquelle la seconde partie de châssis s'étend obliquement par rapport à la première partie de châssis et/ou dans laquelle le châssis est conçu pour permettre à la seconde partie de châssis de pivoter entre une première position de pivot dans laquelle la direction axiale de la première partie de châssis est parallèle à la direction axiale de la seconde partie de châssis et une seconde position de pivot dans laquelle la direction axiale de la seconde partie de châssis se trouve obliquement par rapport à la direction axiale de la première partie de châssis.

3. Machine de traitement selon l'une quelconque des revendications qui précèdent, dans laquelle le châssis est conçu de telle sorte que la seconde partie de châssis peut pivoter par rapport à la première partie de châssis entre une première position de pivot dans laquelle l'angle entre les directions axiales respectivement de la première et de la seconde partie de châssis est d'un maximum de 4 degrés et une seconde position de pivot dans laquelle ledit angle est entre 5 et 30 degrés, de préférence entre 10 et 20 degrés, encore plus préférablement environ 15 degrés.

4. Machine de traitement selon l'une quelconque des revendications qui précèdent, dans laquelle l'élément de pivot est positionné au centre dans direction latérale et/ou est agencé entre les roues avant et arrière dans la direction axiale et/ou dans lequel l'élément de pivot est également conçu pour permettre à la première et à la seconde partie de châssis de pivoter l'une par rapport à l'autre autour d'un axe imaginaire ou physique en direction axiale de la première partie de châssis ou de la seconde partie de châssis, sensiblement transversalement à l'axe vertical.

5. Machine de traitement selon l'une quelconque des revendications qui précèdent, dans laquelle la suspension des roues avant et la suspension des roues arrière sont toutes deux conçues pour permettre un changement de la position respectivement des roues avant et arrière par rapport aux directions axiales de la première et de la seconde partie de châssis respectivement et/ou dans laquelle la suspension des roues avant et des roues arrière est conçue pour faire pivoter chacune des roues avant et des roues arrière indépendamment les unes des autres.

6. Machine de traitement selon l'une quelconque des revendications qui précèdent, dans laquelle la seconde unité de direction est conçue pour ajuster la position de pivot des roues arrière à la position de pivot de la seconde partie de châssis et/ou dans laquelle le moyen de transport comprend un premier convoyeur sans fin monté sur la première partie de châssis et un second convoyeur sans fin monté sur la seconde partie de châssis.

7. Machine de traitement selon l'une quelconque des revendications qui précèdent, dans laquelle l'unité de ramassage est une unité de préhension permettant de ramasser des plantes à fibres depuis le sol et/ou dans laquelle l'unité de préhension est une unité de préhension de chanvre conçue pour saisir des plants de chanvre et/ou dans laquelle l'unité de préhension est une unité de préhension de lin conçue pour saisir du lin.

8. Machine de traitement selon l'une quelconque des revendications qui précèdent, dans laquelle l'unité de ramassage est une unité de ramassage permettant de ramasser des plantes à fibres déjà saisies et précédemment déposées sur la surface du sol et/ou dans laquelle l'unité de ramassage est une unité de ramassage interchangeable qui est accouplée de manière amovible à la première partie de châssis.

9. Machine de traitement selon l'une quelconque des revendications qui précèdent, comprenant un entraînement conçu pour entraîner chacune des roues avant et des roues arrière indépendamment et/ou dans laquelle l'entraînement comprend une unité de pompe hydraulique qui est entraînée par une source de puissance et à laquelle sont reliées une première unité d'entraînement accouplée à la première roue avant et conçue pour entraîner la première roue avant, une deuxième unité d'entraînement accouplée à la seconde roue avant et conçue pour entraîner la seconde roue avant, une troisième unité d'entraînement accouplée à la première roue arrière et conçue pour entraîner la première roue arrière, et une quatrième unité d'entraînement accouplée à la seconde roue arrière et conçue pour entraîner la seconde roue arrière et/ou comprenant un entraînement qui est conçu pour faire varier de manière sensiblement continue le couple transmis aux roues avant et arrière par des unités d'entraînement indépendamment l'une de l'autre, dans lequel les unités d'entraînement comprennent éventuellement des moteurs d'entraînement hydrauliques respectifs, dans laquelle chacun des moteurs d'entraînement hydrauliques comprend de préférence un moteur à piston à axe courbé de cylindrée variable, dans laquelle les moteurs d'entraînement hydrauliques sont de préférence intégrés aux roues avant et arrière respectives.

10. Machine de traitement selon l'une quelconque des revendications qui précèdent, comprenant des mécanismes de transmission respectifs pour chacune des roues avant et chacune des roues arrière, dans laquelle les mécanismes de transmission sont accouplés à des moteurs d'entraînement hydrauliques respectifs dans le but de transmettre la rotation du moteur d'entraînement à la roue avant ou arrière concernée avec au moins une rapport de transmission sélectionné, dans laquelle chacun des mécanismes de transmission comprend de préférence une transmission planétaire.

11. Machine de traitement selon l'une quelconque des revendications qui précèdent, dans laquelle la seconde partie de châssis a au moins une roue arrière sur un côté gauche de la seconde partie de châssis et au moins une roue arrière sur un côté droit de la seconde partie de châssis, et dans laquelle la seconde unité de direction comprend :
- un premier actionneur, monté sur la seconde partie de châssis et une roue arrière gauche ; et
- un second actionneur, monté sur la seconde partie de châssis et une roue arrière droite, dans laquelle les actionneurs comprennent de préférence un vérin hydraulique extensible.

12. Machine de traitement selon l'une quelconque des revendications qui précèdent, comprenant un seul essieu arrière qui est monté de manière pivotante sur l'au moins une roue arrière sur le côté gauche de la seconde partie de châssis et l'au moins une roue arrière sur le côté droit de la seconde partie de châssis, dans laquelle l'essieu arrière et les roues arrière montées sur celui-ci sont en outre disposés par l'intermédiaire d'au moins un élément de pivot central sur la seconde partie de châssis pour pivoter autour d'un axe de pivot imaginaire ou physique s'étendant dans la direction longitudinale de la seconde partie de châssis, dans laquelle l'essieu arrière comprend de préférence un essieu oscillant ou un essieu à bascule.

13. Machine de traitement selon l'une quelconque des revendications qui précèdent, dans laquelle les roues arrière, en particulier l'au moins une roue arrière gauche et l'au moins une roue arrière droite, sont combinées en une seule roue arrière positionnée au centre dans la direction latérale.

14. Utilisation de la machine de traitement selon l'une quelconque des revendications qui précèdent pour traiter des plantes à fibres.

15. Procédé de traitement de plantes à fibres, en particulier de chanvre ou de lin, avec une machine de traitement selon l'une quelconque des revendications 1 à 13, le procédé comprenant le pivotement de la seconde partie de châssis par rapport à la première partie de châssis et l'entraînement du véhicule automoteur sur le sol dans un état pivoté dans le but de ramasser des plantes à fibres le long d'une première rangée avec l'unité de ramassage sur la première partie de châssis, le transport des plantes à fibres ramassées depuis l'unité de ramassage jusqu'au moyen de distribution de la seconde partie de châssis et la distribution des plantes à fibres ramassées et transportées le long d'une seconde rangée avec le moyen de distribution, dans lequel la seconde rangée se trouve au niveau d'une position décalée dans une direction latérale transversalement à la direction axiale, le procédé comprenant éventuellement la commande de la position de pivot des roues arrière fournies sur la seconde partie de châssis avec une unité de direction et ainsi le pivotement de la seconde partie de châssis par rapport à la première partie de châssis.
